# EUROPEAN PATENT APPLICATION

(11) **EP 4 808 209 A1**
(43) Date of publication of application: **16.09.2026**
(21) Application number: 24896219.3
(22) Date of filing: 06.11.2024
(51) Int. Cl.: H04W 36/00

(54) **COMMUNICATION METHOD, APPARATUS AND SYSTEM**

(30) Priority: 30.11.2023 CN 202311626632
(71) Applicant: Huawei Technologies Co., Ltd., Shenzhen, Guangdong 518129 (CN)
(72) Inventor: WANG, Fanfan, Shenzhen, Guangdong 518129 (CN)
(74) Representative: Epping - Hermann - Fischer
(86) International application number: PCT/CN2024/130262
(87) International publication number: WO 2025/113128

(57) **Abstract**

This application provides a communication method, apparatus, and system, applicable to LTM scenarios. In the method, when a connection failure occurs, a terminal device records a cause of the connection failure and information related to a mobility process, and reports the cause and the related information to a network device, so that the network device optimizes related parameters, to reduce an interruption delay caused by the connection failure.

## Description

This application claims priority to Chinese Patent Application No. 202311626632.4, filed with the China National Intellectual Property Administration on November 30, 2023 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

To identify mobility-related exceptions including radio link failures, handover failures, and radio link failures in a target cell, user equipment (user equipment, UE) may record mobility-related exception parameters, that is, a radio link failure (radio link failure report, RLF report), and report the mobility-related exception parameters to a network device, and the network device may optimize mobility parameters of the UE based on the RLF report. However, the current RLF report mechanism does not support layer 1/layer 2 signaling triggered mobility (L1/L1 triggered mobility, LTM) scenarios.

### SUMMARY

This application provides a communication method, apparatus, and system, to analyze a failure cause in LTM scenarios, so as to adjust LTM-related parameters, thereby reducing records of occurrence of mobility exceptions, and improving user experience.

According to a first aspect, a communication method is provided. The method may be performed by a terminal device, or may be performed by a chip or a circuit used in a terminal device, or may be implemented by a logical module or software that can implement all or some functions of a terminal device. This is not limited in this application.

The method includes: receiving first information, where the first information indicates a terminal device to hand over from a source cell to a target cell, the target cell belongs to at least one candidate cell, configuration information of the target cell belongs to configuration information of the at least one candidate cell that is received by the terminal device, and the first information is conveyed in a medium access control control element; recording a first report, where the first report indicates a cause of a connection failure during a layer 1 or layer 2 mobility process performed by the terminal device; and sending the first report.

In the method, when a connection failure occurs in LTM scenarios, the terminal device can report a cause of the connection failure to a network device by using the first report. Further, the terminal device may further report, in the first report, other related information in a mobility process, so that the network device performs root cause analysis and optimizes related parameters, to improve accuracy of optimizing the parameter by the network device, thereby reducing an interruption delay caused by the connection failure.

In some implementations, the first report further indicates information about a first candidate cell, the information about the first candidate cell includes at least one of: identification information of the first candidate cell, whether a random access response RAR is configured for the first candidate cell, or layer 1 reporting configuration information corresponding to the first candidate cell, and the first candidate cell is one or more of the at least one candidate cell.

In some implementations, the first report further indicates early timing advance information, and the early timing advance information includes at least one of: whether the terminal device performs early timing advance in the target cell, a candidate cell for performing the early timing advance, a quantity of physical downlink control channel orders for indicating to perform the early timing advance in the candidate cell, physical random access channel resource information, a synchronization signal block beam identifier, or a preamble identifier.

In this manner, a network side optimizes, based on the first report, an early timing-related process and parameter, to increase a probability of random access free during handover, and reduce data transmission interruption time.

In some implementations, the connection failure includes a radio link failure in the source cell; and a cause of the radio link failure includes at least one of the following:
a first timer expires, that is, running duration of the first timer is greater than or equal to a first threshold, where the running duration of the first timer is duration from a time point when the terminal device detects a physical layer out-of-synchronization problem with a source network device to a time point when the terminal device receives the first information; or
a second timer expires, that is, running duration of the second timer is greater than or equal to a second threshold, where the running duration of the second timer is duration from a time point when the terminal device triggers measurement report transmission to the time point when the terminal device receives the first information during running of the first timer.

In some implementations, the cause of the radio link failure further includes at least one of: a random access failure, a beam failure recovery failure, a listen before talk failure, or a quantity of radio link control layer protocol retransmissions being greater than or equal to a fifth threshold.

In some implementations, the first report further indicates radio link failure information of the source cell, and the radio link failure information of the source cell includes at least one of: a layer 1 measurement result or a layer 3 measurement result that is available upon detecting a failure, a connection failure type being radio link failure, a cell in which a radio link failure occurs being the source cell, or duration from a time point when the terminal device receives the configuration information of the at least one candidate cell to a time point when the terminal device detects the radio link failure of the source cell.

In the foregoing implementation, the terminal device reports a failure cause and related information to the network device in a timely manner when a connection failure occurs in the source cell, so that the network side can analyze the failure cause of the RLF in the source cell, thereby optimizing a mobility parameter, and reducing a probability that the terminal device encounters an RLF in the source cell due to too late handover.

In some implementations, the connection failure includes a handover failure of the terminal device or a handover failure within a first time period after a handover success, and the first time period is predefined or configured.

In other words, handover of the terminal device fails or a failure occurs shortly after handover succeeds.

In some implementations, the first report further indicates at least one of the following:
an identifier of the target cell;
whether the target cell has an available timing advance value;
an access type used by the terminal device to access the target cell, where the access type is random access free or random access, or the access type is random access free; or whether the access type is random access free;
beam indication information used for uplink or downlink data transmission in the target cell;
an identifier of a first cell, where the first cell is a cell having an available timing advance value, and the first cell is one or more of the at least one candidate cell; or
first time information, where the first time information includes at least one of the following:
   duration from a time point when the terminal device receives the configuration information of the at least one candidate cell to a time point when the terminal device receives the first information or a time point when the terminal device initiates cell switch;
   duration from a time point when the terminal device receives a 1^{st} physical downlink control channel PDCCH order to a time point when the terminal device receives the first information or a time point when the terminal device initiates cell switch; or
   duration from a time point when the terminal device receives a last physical downlink control channel PDCCH order to a time point when the terminal device receives the first information or a time point when the terminal device initiates cell switch.

In some implementations, the first report further indicates at least one of the following:
a connection failure type, where the connection failure type is handover failure or radio link failure;
a cause of the handover failure, where the cause of the handover failure includes at least one of the following:
   a third timer expires, that is, running duration of the third timer is greater than or equal to a third threshold, where the running duration of the third timer is duration from the time point when the terminal device receives the first information to a time point when the terminal device completes random access or a time point when the terminal device sends a 1^{st} piece of uplink data; or
   a fourth timer expires, that is, running duration of the fourth timer is greater than or equal to a fourth threshold, where the running duration of the fourth timer is duration from a time point when the terminal receives or executes an RRC reconfiguration message having a synchronization function to a time point when the terminal device completes random access or a time point when the terminal device receives a physical control channel transmission after a 1^{st} uplink transmission during random access free;
   a type of a handover being layer 1 or layer 2 mobility switch;
   detecting that a cell in which a connection failure occurs is the target cell;
   second time information, where the second time information includes duration from a time point when the terminal device receives a previous layer 1 or layer 2 mobility command to a time point when a cell switch failure occurs or a time point when the terminal device sends the first report; or
   the second time information includes duration from a time point when the terminal device initiates cell switch to a time point when a cell switch failure occurs or a time point when the terminal device sends the first report;
   the running duration of the third timer;
   the running duration of the fourth timer;
   a layer 1 measurement result or a layer 3 measurement result that is available upon detecting a failure; or
   random access-based cell switch process information, where the random access-based cell switch process information includes information about a 2-step random access procedure and/or a 4-step random access procedure.

In the foregoing implementation, the terminal device records information related to a failure of cell switch performed by the UE or a failure that occurs shortly after successful switch in LTM scenarios, and reports the related information to the network device, so that the network side can analyze a cause of a failure in accessing the target cell or a failure in the target cell, thereby optimizing a corresponding mobility parameter, and reducing a probability of too early switch or switch to a wrong cell.

According to a second aspect, a communication method is provided. The method may be performed by a network device, or may be performed by a chip or a circuit used in a network device, or may be implemented by a logical module or software that can implement all or some functions of a network device. This is not limited in this application.

The method includes: sending first information, where the first information indicates a terminal device to hand over from a source cell to a target cell, the target cell belongs to at least one candidate cell, configuration information of the target cell belongs to configuration information of the at least one candidate cell that is received by the terminal device, and the first information is conveyed in a medium access control control element; and receiving a first report, where the first report indicates a cause of a connection failure during a layer 1 or layer 2 mobility process performed by the terminal device.

In some implementations, the first report further indicates information about a first candidate cell, the information about the first candidate cell includes at least one of: identification information of the first candidate cell, whether a random access response RAR is configured for the first candidate cell, or layer 1 reporting configuration information corresponding to the first candidate cell, and the first candidate cell is one or more of the at least one candidate cell.

In some implementations, the first report further indicates early timing advance information, and the early timing advance information includes at least one of: whether the terminal device performs early timing advance in the target cell, a candidate cell for performing the early timing advance, a quantity of physical downlink control channel orders for indicating to perform the early timing advance in the candidate cell, physical random access channel resource information, a synchronization signal block beam identifier, or a preamble identifier.

In some implementations, the connection failure includes a radio link failure of the source cell; and
a cause of the radio link failure includes at least one of the following:
a first timer expires, that is, running duration of the first timer is greater than or equal to a first threshold, where the running duration of the first timer is duration from a time point when the terminal device detects a physical layer out-of-synchronization problem with a source network device to a time point when the terminal device receives the first information; or
a second timer expires, that is, running duration of the second timer is greater than or equal to a second threshold, where the running duration of the second timer is duration from a time point when the terminal device triggers measurement report transmission to the time point when the terminal device receives the first information during running of the first timer.

In some implementations, the cause of the radio link failure further includes at least one of: a random access failure, a beam failure recovery failure, a listen before talk failure, or a quantity of radio link control layer protocol retransmissions being greater than or equal to a fifth threshold. In some implementations, the first report further indicates radio link failure information of the source cell, and the radio link failure information of the source cell includes at least one of: a layer 1 measurement result or a layer 3 measurement result that is available upon detecting a failure, a connection failure type being radio link failure, a cell in which a radio link failure occurs being the source cell, or duration from a time point when the terminal device receives the configuration information of the at least one candidate cell to a time point when the terminal device detects the radio link failure of the source cell.

In some implementations, the connection failure includes a handover failure of the terminal device or a handover failure within a first time period after a handover success, and the first time period is predefined or configured.

In some implementations, the first report further indicates at least one of the following:
an identifier of the target cell;
whether the target cell has an available timing advance value;
an access type used by the terminal device to access the target cell, where the access type is random access free or random access, or the access type is random access free;
beam indication information used for uplink or downlink data transmission in the target cell;
an identifier of a first cell, where the first cell is a cell having an available timing advance value, and the first cell is one or more of the at least one candidate cell; or
first time information, where the first time information includes at least one of the following:
   duration from a time point when the terminal device receives the configuration information of the at least one candidate cell to a time point when the terminal device receives the first information or a time point when the terminal device initiates cell switch;
   duration from a time point when the terminal device receives a 1^{st} physical downlink control channel PDCCH order to a time point when the terminal device receives the first information or a time point when the terminal device initiates cell switch; or
   duration from a time point when the terminal device receives a last physical downlink control channel PDCCH order to a time point when the terminal device receives the first information or a time point when the terminal device initiates cell switch.

In some implementations, the first report further indicates at least one of the following:
a connection failure type, where the connection failure type is handover failure or radio link failure;
a cause of the handover failure, where the cause of the handover failure includes at least one of the following:
   a third timer expires, that is, running duration of the third timer is greater than or equal to a third threshold, where
   the running duration of the third timer is duration from the time point when the terminal device receives the first information to a time point when the terminal device completes random access or a time point when the terminal device sends a 1^{st} piece of uplink data; or
   a fourth timer expires, that is, running duration of the fourth timer is greater than or equal to a fourth threshold, where the running duration of the fourth timer is duration from a time point when the terminal receives or executes an RRC reconfiguration message having a synchronization function to a time point when the terminal device completes random access or a time point when the terminal device receives a physical control channel transmission after a 1^{st} uplink transmission during random access free;
   a type of a handover being layer 1 or layer 2 mobility switch;
   detecting that a cell in which a connection failure occurs is the target cell;
   second time information, where the second time information includes duration from a time point when the terminal device receives a previous layer 1 or layer 2 mobility command to a time point when a cell switch failure occurs or a time point when the terminal device sends the first report; or
   the second time information includes duration from a time point when the terminal device initiates cell switch to a time point when a cell switch failure occurs or a time point when the terminal device sends the first report;
   the running duration of the third timer;
   the running duration of the fourth timer;
   a layer 1 measurement result or a layer 3 measurement result that is available upon detecting a failure; or
   random access-based cell switch process information, where the random access-based cell switch process information includes information about a 2-step random access procedure and/or a 4-step random access procedure.

It should be understood that the second aspect is an implementation on a network device side corresponding to the first aspect, and explanations, supplements, and descriptions of beneficial effects of the first aspect are also applicable to the second aspect. Details are not described again. According to a third aspect, a communication apparatus is provided, including a transceiver unit and a processing unit. The transceiver unit is configured to receive first information, where the first information indicates a terminal device to hand over from a source cell to a target cell, the target cell belongs to at least one candidate cell, configuration information of the target cell belongs to configuration information of the at least one candidate cell that is received by the terminal device, and the first information is conveyed in a medium access control control element; the processing unit is configured to record a first report, where the first report indicates a cause of a connection failure during a layer 1 or layer 2 mobility process performed by the terminal device; and the sending unit is further configured to send the first report.

In some implementations, the first report further indicates information about a first candidate cell, the information about the first candidate cell includes at least one of: identification information of the first candidate cell, whether a random access response RAR is configured for the first candidate cell, or layer 1 reporting configuration information corresponding to the first candidate cell, and the first candidate cell is one or more of the at least one candidate cell.

In some implementations, the first report further indicates early timing advance information, and the early timing advance information includes at least one of: whether the terminal device performs early timing advance in the target cell, a candidate cell for performing the early timing advance, a quantity of physical downlink control channel orders for indicating to perform the early timing advance in the candidate cell, physical random access channel resource information, a synchronization signal block beam identifier, or a preamble identifier.

In some implementations, the connection failure includes a radio link failure in the source cell; and a cause of the radio link failure includes at least one of the following:
a first timer expires, that is, running duration of the first timer is greater than or equal to a first threshold, where the running duration of the first timer is duration from a time point when the terminal device detects a physical layer out-of-synchronization problem with a source network device to a time point when the terminal device receives the first information; or
a second timer expires, that is, running duration of the second timer is greater than or equal to a second threshold, where the running duration of the second timer is duration from a time point when the terminal device triggers measurement report transmission to the time point when the terminal device receives the first information during running of the first timer.

In some implementations, the cause of the radio link failure further includes at least one of: a random access failure, a beam failure recovery failure, a listen before talk failure, or a quantity of radio link control layer protocol retransmissions being greater than or equal to a fifth threshold.

In some implementations, the first report further indicates radio link failure information of the source cell, and the radio link failure information of the source cell includes at least one of: a layer 1 measurement result or a layer 3 measurement result that is available upon detecting a failure, a connection failure type being radio link failure, a cell in which a radio link failure occurs being the source cell, or duration from a time point when the terminal device receives the configuration information of the at least one candidate cell to a time point when the terminal device detects the radio link failure of the source cell.

In the foregoing implementation, the terminal device reports a failure cause and related information to the network device in a timely manner when a connection failure occurs in the source cell, so that the network side can analyze the failure cause of the RLF in the source cell, thereby optimizing a mobility parameter, and reducing a probability that the terminal device encounters an RLF in the source cell due to too late handover.

In some implementations, the connection failure includes a handover failure of the terminal device or a handover failure within a first time period after a handover success, and the first time period is predefined or configured.

In other words, handover of the terminal device fails or a failure occurs shortly after handover succeeds.

In some implementations, the first report further indicates at least one of the following:
an identifier of the target cell;
whether the target cell has an available timing advance value;
an access type used by the terminal device to access the target cell, where the access type is random access free or random access, or the access type is random access free;
beam indication information used for uplink or downlink data transmission in the target cell;
an identifier of a first cell, where the first cell is a cell having an available timing advance value, and the first cell is one or more of the at least one candidate cell; or
first time information, where the first time information includes at least one of the following:
   duration from a time point when the terminal device receives the configuration information of the at least one candidate cell to a time point when the terminal device receives the first information or a time point when the terminal device initiates cell switch;
   duration from a time point when the terminal device receives a 1^{st} physical downlink control channel PDCCH order to a time point when the terminal device receives the first information or a time point when the terminal device initiates cell switch; or
   duration from a time point when the terminal device receives a last physical downlink control channel PDCCH order to a time point when the terminal device receives the first information or a time point when the terminal device initiates cell switch.

In some implementations, the first report further indicates at least one of the following:
a connection failure type, where the connection failure type is handover failure or radio link failure;
a cause of the handover failure, where the cause of the handover failure includes at least one of the following:
   a third timer expires, that is, running duration of the third timer is greater than or equal to a third threshold, where
   the running duration of the third timer is duration from the time point when the terminal device receives the first information to a time point when the terminal device completes random access or a time point when the terminal device sends a 1^{st} piece of uplink data; or
   a fourth timer expires, that is, running duration of the fourth timer is greater than or equal to a fourth threshold, where the running duration of the fourth timer is duration from a time point when the terminal receives or executes an RRC reconfiguration message having a synchronization function to a time point when the terminal device completes random access or a time point when the terminal device receives a physical control channel transmission after a 1^{st} uplink transmission during random access free;
   a type of a handover being layer 1 or layer 2 mobility switch;
   detecting that a cell in which a connection failure occurs is the target cell;
   second time information, where the second time information includes duration from a time point when the terminal device receives a previous layer 1 or layer 2 mobility command to a time point when a cell switch failure occurs or a time point when the terminal device sends the first report; or
   the second time information includes duration from a time point when the terminal device initiates cell switch to a time point when a cell switch failure occurs or a time point when the terminal device sends the first report;
   the running duration of the third timer;
   the running duration of the fourth timer;
   a layer 1 measurement result or a layer 3 measurement result that is available upon detecting a failure; or
   random access-based cell switch process information, where the random access-based cell switch process information includes information about a 2-step random access procedure and/or a 4-step random access procedure.

According to a fourth aspect, a communication apparatus is provided, including a transceiver unit. The transceiver unit is configured to send first information, where the first information indicates a terminal device to hand over from a source cell to a target cell, the target cell belongs to at least one candidate cell, configuration information of the target cell belongs to configuration information of the at least one candidate cell that is received by the terminal device, and the first information is conveyed in a medium access control control element; and the transceiver unit is further configured to receive a first report, where the first report indicates a cause of a connection failure during a layer 1 or layer 2 mobility process performed by the terminal device.

In some implementations, the first report further indicates information about a first candidate cell, the information about the first candidate cell includes at least one of: identification information of the first candidate cell, whether a random access response RAR is configured for the first candidate cell, or layer 1 reporting configuration information corresponding to the first candidate cell, and the first candidate cell is one or more of the at least one candidate cell.

In some implementations, the first report further indicates early timing advance information, and the early timing advance information includes at least one of: whether the terminal device performs early timing advance in the target cell, a candidate cell for performing the early timing advance, a quantity of physical downlink control channel orders for indicating to perform the early timing advance in the candidate cell, physical random access channel resource information, a synchronization signal block beam identifier, or a preamble identifier.

In some implementations, the connection failure includes a radio link failure of the source cell; and
a cause of the radio link failure includes at least one of the following:
a first timer expires, that is, running duration of the first timer is greater than or equal to a first threshold, where the running duration of the first timer is duration from a time point when the terminal device detects a physical layer out-of-synchronization problem with a source network device to a time point when the terminal device receives the first information; or
a second timer expires, that is, running duration of the second timer is greater than or equal to a second threshold, where the running duration of the second timer is duration from a time point when the terminal device triggers measurement report transmission to the time point when the terminal device receives the first information during running of the first timer.

In some implementations, the cause of the radio link failure further includes at least one of: a random access failure, a beam failure recovery failure, a listen before talk failure, or a quantity of radio link control layer protocol retransmissions being greater than or equal to a fifth threshold. In some implementations, the first report further indicates radio link failure information of the source cell, and the radio link failure information of the source cell includes at least one of: a layer 1 measurement result or a layer 3 measurement result that is available upon detecting a failure, a connection failure type being radio link failure, a cell in which a radio link failure occurs being the source cell, or duration from a time point when the terminal device receives the configuration information of the at least one candidate cell to a time point when the terminal device detects the radio link failure of the source cell.

In some implementations, the connection failure includes a handover failure of the terminal device or a handover failure within a first time period after a handover success, and the first time period is predefined or configured.

In some implementations, the first report further indicates at least one of the following:
an identifier of the target cell;
whether the target cell has an available timing advance value;
an access type used by the terminal device to access the target cell, where the access type is random access free or random access, or the access type is random access free;
beam indication information used for uplink or downlink data transmission in the target cell;
an identifier of a first cell, where the first cell is a cell having an available timing advance value, and the first cell is one or more of the at least one candidate cell; or
first time information, where the first time information includes at least one of the following:
   duration from a time point when the terminal device receives the configuration information of the at least one candidate cell to a time point when the terminal device receives the first information or a time point when the terminal device initiates cell switch;
   duration from a time point when the terminal device receives a 1^{st} physical downlink control channel PDCCH order to a time point when the terminal device receives the first information or a time point when the terminal device initiates cell switch; or
   duration from a time point when the terminal device receives a last physical downlink control channel PDCCH order to a time point when the terminal device receives the first information or a time point when the terminal device initiates cell switch.

In some implementations, the first report further indicates at least one of the following:
a connection failure type, where the connection failure type is handover failure or radio link failure;
a cause of the handover failure, where the cause of the handover failure includes at least one of the following:
   a third timer expires, that is, running duration of the third timer is greater than or equal to a third threshold, where
   the running duration of the third timer is duration from the time point when the terminal device receives the first information to a time point when the terminal device completes random access or a time point when the terminal device sends a 1^{st} piece of uplink data; or
   a fourth timer expires, that is, running duration of the fourth timer is greater than or equal to a fourth threshold, where the running duration of the fourth timer is duration from a time point when the terminal receives or executes an RRC reconfiguration message having a synchronization function to a time point when the terminal device completes random access or a time point when the terminal device receives a physical control channel transmission after a 1^{st} uplink transmission during random access free;
   a type of a handover being layer 1 or layer 2 mobility switch;
   detecting that a cell in which a connection failure occurs is the target cell;
   second time information, where the second time information includes duration from a time point when the terminal device receives a previous layer 1 or layer 2 mobility command to a time point when a cell switch failure occurs or a time point when the terminal device sends the first report; or
   the second time information includes duration from a time point when the terminal device initiates cell switch to a time point when a cell switch failure occurs or a time point when the terminal device sends the first report;
   the running duration of the third timer;
   the running duration of the fourth timer;
   a layer 1 measurement result or a layer 3 measurement result that is available upon detecting a failure; or
   random access-based cell switch process information, where the random access-based cell switch process information includes information about a 2-step random access procedure and/or a 4-step random access procedure.

According to a fifth aspect, this application provides a communication apparatus, including an interface circuit and a processor. The interface circuit is configured to implement a function of the transceiver module in the third aspect. The processor is configured to implement a function of the processing module in the third aspect.

According to a sixth aspect, this application provides a communication apparatus, including an interface circuit and a processor. The interface circuit is configured to implement a function of the transceiver module in the fourth aspect. The processor is configured to implement a function of the processing module in the sixth aspect.

According to a seventh aspect, this application provides a computer-readable medium. The computer-readable medium stores program code to be executed by a terminal device, and the program code includes instructions used to perform the method in the first aspect, any one of the possible manners of the first aspect, or all the possible manners of the first aspect.

According to an eighth aspect, an embodiment of this application provides a computer-readable medium. The computer-readable medium stores program code to be executed by a network device, and the program code includes instructions used to perform the method in the second aspect, the third aspect, any one of the possible manners of the second aspect, any one of the possible manners of the third aspect, all the possible manners of the second aspect, or all the possible manners of the third aspect.

According to a ninth aspect, a computer program product storing computer-readable instructions is provided. When the computer-readable instructions are run on a computer, the computer is enabled to perform the method in the first aspect, any one of the possible manners of the first aspect, or all the possible manners of the first aspect.

According to a tenth aspect, a computer program product storing computer-readable instructions is provided. When the computer-readable instructions are run on a computer, the computer is enabled to perform the method in the second aspect, any one of the possible manners of the second aspect, or all the possible manners of the second aspect.

According to an eleventh aspect, a communication system is provided. The communication system includes an apparatus that has a function of implementing the method in the first aspect, any one of the possible manners of the first aspect, or all the possible manners of the first aspect, the method in the second aspect, any one of the possible manners of the second aspect, or all the possible manners of the second aspect, and various possible designs.

According to a twelfth aspect, a processor is provided. The processor is configured to be coupled to a memory, and configured to perform the method in the first aspect, any one of the possible manners of the first aspect, or all the possible manners of the first aspect.

According to a thirteenth aspect, a processor is provided. The processor is configured to be coupled to a memory, and configured to perform the method in the second aspect, any one of the possible manners of the second aspect, or all the possible manners of the second aspect.

According to a fourteenth aspect, a chip system is provided. The chip system includes a processor, and may further include a memory. The processor is configured to execute a computer program or instructions stored in the memory, to enable the chip system to implement the method in either the first aspect or the second aspect, and any possible implementation of either aspect. The chip system may include a chip, or may include a chip and another discrete component.

### BRIEF DESCRIPTION OF DRAWINGS

FIG. 1 is a diagram of a wireless communication system applicable to an embodiment of this application;
FIG. 2 is a diagram of a protocol stack applicable to an embodiment of this application;
FIG. 3 is a diagram of an O-RAN system applicable to an embodiment of this application;
FIG. 4 is a schematic flowchart of 4-step contention based random access according to an embodiment of this application;
FIG. 5 is a schematic flowchart of 2-step contention based random access according to an embodiment of this application;
FIG. 6 is a diagram of a communication method according to an embodiment of this application;
FIG. 7 is a schematic flowchart of a communication method according to an embodiment of this application;
FIG. 8a and FIG. 8b are diagrams of two handover procedures according to an embodiment of this application;
FIG. 9 is a schematic flowchart of another communication method according to an embodiment of this application;
FIG. 10 is a block diagram of a communication apparatus according to an embodiment of this application;
FIG. 11 is a diagram of a structure of a communication apparatus according to an embodiment of this application; and
FIG. 12 is a diagram of a chip system according to an embodiment of this application.

### DESCRIPTION OF EMBODIMENTS

The following describes the technical solutions in embodiments of this application with reference to the accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

The terminal device in embodiments of this application includes various devices having a wireless communication function, and may be configured to be connected to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, such as an MTC terminal or an IoT terminal. The terminal device may be user equipment (user equipment, UE) in the 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having wireless sending and receiving functions, a smart book, a vehicle, a satellite, a global positioning system (global positioning system, GPS) device, a target tracking device, an aircraft (for example, an uncrewed aerial vehicle, a helicopter, a multi-helicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is a terminal or UE is used below for description.

It should be understood that, in some scenarios, the UE may be further configured to serve as a base station. For example, the UE may serve as a scheduling entity that provides a sidelink signal between UEs in a scenario like V2X, D2D, or P2P.

In embodiments of this application, an apparatus configured to implement a function of a terminal device may be a terminal device, or may be an apparatus that can support a terminal device in implementing the function, for example, a chip system or a chip. The apparatus may be installed in the terminal device. In embodiments of this application, the chip system may include a chip, or may include a chip and another discrete component.

The network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that undertakes a base station function in D2D, V2X, or M2M communication, a network side device in a 6G network, a device that undertakes a base station function in a future communication system, or the like. The base station may support networks using a same access technology or different access technologies. Neither of a specific technology and a specific device form used by the network device is limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In embodiments of this application, an apparatus configured to implement a function of a network device may be a terminal device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on land, including an indoor or outdoor device, a handheld device, or a vehicle-mounted device; or may be deployed on a water surface; or may be deployed on a plane, a balloon, or a satellite in the air. A scenario in which the network device and the terminal device are located is not limited in embodiments of this application.

First, a network architecture applicable to embodiments of this application is briefly described below.

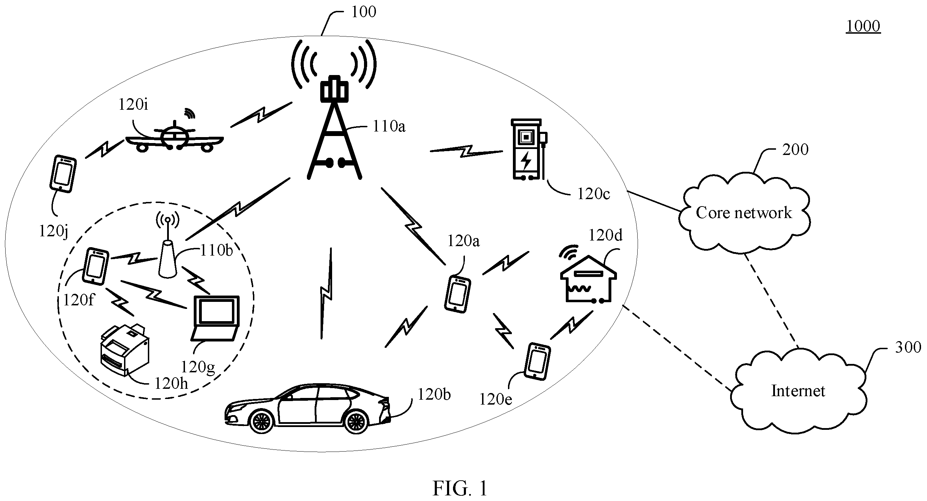

FIG. 1 is a diagram of wireless communication system 100 to which an embodiment of this application is applicable. As shown in FIG. 1, the wireless communication system 100 may include at least one network device, for example, a network device 110a shown in FIG. 1. The wireless communication system 100 may further include at least one terminal device, for example, a terminal device 120a and a terminal device 120b shown in FIG. 1. A plurality of antennas may be configured for both the network device and the terminal device, and the network device and the terminal device may communicate with each other by using a multi-antenna technology. The terminal devices may also communicate with each other. For example, the terminal devices may directly communicate with each other. For another example, the terminal devices may communicate with each other via another communication device, for example, a network device or another terminal device.

When the network device communicates with the terminal device, the network device may manage one or more cells, and one cell may have an integer quantity of terminal devices. Optionally, the network device 110a and the terminal device 120a form one single-cell communication system. Without loss of generality, the cell is referred to as a cell #1. The network device 110a may be a network device in the cell #1, or the network device 110a may serve a terminal device (for example, the terminal device 120a) in the cell #1.

It should be noted that, the cell may be understood as an area within coverage of a radio signal of the network device.

It should be understood that FIG. 1 is merely a simplified diagram of an example for ease of understanding. The wireless communication system 100 may further include another network device or may further include another terminal device, which is not shown in FIG. 1. Embodiments of this application are applicable to any communication scenario in which a transmitter device communicates with a receiver device.
(1) A terminal 120 may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with wireless sending and receiving functions, a wearable device, a vehicle, an uncrewed aerial vehicle, a helicopter, an airplane, a ship, a robot, a robot arm, a smart home device, or the like. A device form of the terminal is not limited in embodiments of this application.
(2) A RAN node 110 may also be referred to as an access network device, a RAN entity, an access node, or the like sometimes, and constitutes a part of the communication system, to help the terminal implement radio access. A plurality of RAN nodes 110 in the communication system 1000 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

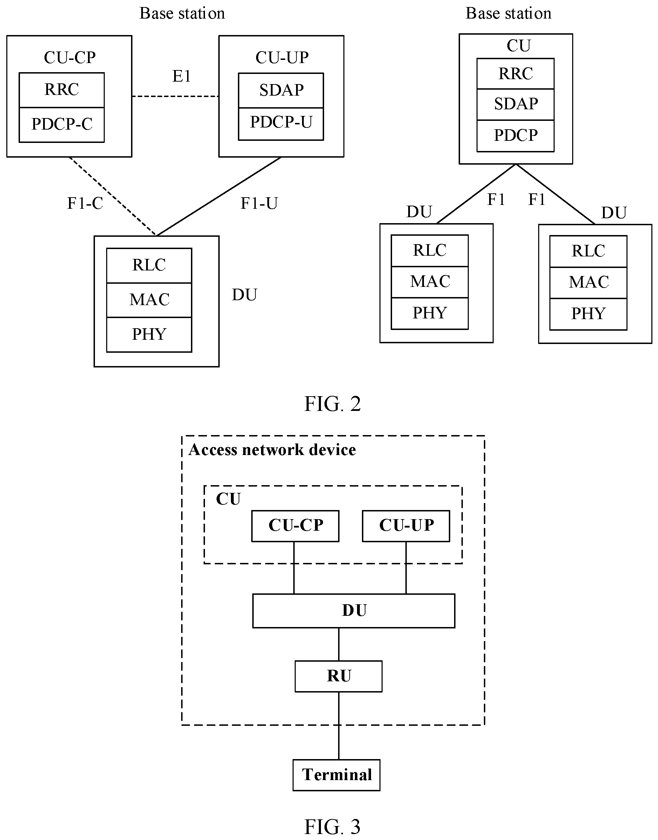

In another possible scenario, a plurality of RAN nodes coordinate to assist the terminal in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The CU node and the DU node separate protocol layers of a gNB. Functions of some protocol layers are controlled by the CU in a centralized manner. Functions of some or all remaining protocol layers are distributed in the DU, and the CU controls the DU in a centralized manner. In an implementation, as shown in FIG. 2, a radio resource control (radio Resource Control, RRC) layer, a PDCP layer, and a service data adaptation protocol (service data adaptation protocol, SDAP) layer in a protocol stack are deployed in the CU. A radio link control (radio link control, RLC) layer, a media access control (media access control, MAC) layer, and a physical layer (physical layer, PHY) in the protocol stack are deployed in the DU. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module. For a correspondence between an O-RAN access network device (network element module) and a protocol layer function that can be implemented by the O-RAN access network device, refer to Table 1.

**Table 1: Correspondence between an O-RAN access network device (network element module) and a protocol layer function that can be implemented by the O-RAN access network device**

| Network element name | Chinese and English full name | Description |
|---|---|---|
| O-CU | O-RAN central unit or O-RAN control unit (O-RAN central unit or O-RAN control unit) | Used to implement a radio resource control (radio resource control, RRC) layer, a packet data convergence protocol (packet data convergence protocol, PDCP) layer, a service data adaptation protocol (service data adaptation protocol, SDAP) layer, and other control functions in the 3GPP standard. |
| O-CU-CP | O-RAN central unit control plane or O-RAN control unit control plane (O-RAN central unit control plane or O-RAN control unit control plane) | Similar to a CU-CP in an NR system, and used to implement a function of an RRC layer and a control plane function of a PDCP layer. |
| O-CU-UP | O-RAN central unit user plane or O-RAN control unit user plane (O-RAN central unit user plane or O-RAN control unit user plane) | Similar to a CU-UP in an NR system, and used to implement a function of an SDAP layer and a user plane function of a PDCP layer. |
| O-DU | O-RAN distributed unit (O-RAN distribution unit) | Performing division based on lower layer functions, and used to implement a radio link control (radio link control, RLC) layer, a media access control (media access control, MAC) layer, and a higher layer (close to the MAC layer) of a physical layer (PHY) in the 3GPP standard, where a higher layer function of the physical layer includes one or more of the following: forward error correction (forward error correction, FEC) coding/decoding, scrambling/descrambling, or modulation/demodulation. |
| O-RU | O-RAN radio unit (O-RAN radio unit) | Performing division based on lower layer functions, and used to implement a lower layer (close to radio frequency) function of a PHY and a radio frequency function in the 3GPP standard, where the lower layer function of the physical layer includes one or more of the following: fast Fourier transform (fast Fourier transform, FFT)/inverse fast Fourier transform (inverse fast Fourier transform, iFFT), digital beamforming, physical random access channel (physical random access channel, PRACH) extraction and filtering, or the like. |
| | | Similar to a transmission reception point (transmission reception point, TRP) or a remote radio head (remote radio head, RRH) in 3GPP, but including a lower layer function of a PHY, such as FFT/iFFT or PRACH extraction. |

For example, FIG. 3 is a diagram of an O-RAN system. The O-RAN system may include one or more CUs, DUs, and RUs.

(3) A core network device is a device in a core network (core network, CN) that provides service support for a terminal. Currently, some examples of the core network device are: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of a terminal. The SMF entity may be responsible for session management, for example, user session establishment. The UPF entity may be a function entity on a user plane, and is mainly responsible for connecting to an external network. It should be noted that, the entity in this application may also be referred to as a network element or a function entity. For example, the AMF entity may also be referred to as an AMF network element or an AMF function entity. For another example, the SMF entity may also be referred to as an SMF network element or an SMF function entity.

For ease of understanding of embodiments of this application, terms in embodiments of this application are first briefly described below.

### 1. Conventional (basic) handover

In a mobile communication system, in a conventional handover procedure, mobility management of UE in a connected state is controlled by a network device. For example, a source base station indicates, by sending an RRC reconfiguration message including a handover command, a specific target cell to which the UE is to be handed over and how to perform handover. Specifically, after receiving the RRC reconfiguration message including the handover command, the UE immediately releases a source cell, stops uplink/downlink data transmission with the source cell, and accesses the target cell based on content included in the handover command. Therefore, successfully sending a handover message is a necessary condition to ensure successful handover in a conventional handover mechanism.

### 2. Conditional handover (Conditional Handover, CHO)

A CHO mechanism can improve a handover success rate. For example, when quality of a source link is relatively good, a source base station sends an RRC reconfiguration message including CHO configuration information to UE. The CHO configuration information may include configuration information of one or more candidate cells, an execution trigger condition of the candidate cell, a measurement configuration, or the like. After receiving the CHO configuration information, the UE does not immediately initiate a handover execution action to any candidate cell, but continues to maintain a connection and data transmission with the source base station. After finding a candidate cell that meets the execution trigger condition from the candidate cells, the UE may autonomously determine a target cell, and further initiate handover execution. Different from CHO, in basic handover, after receiving a handover command, the UE immediately performs handover to a target cell indicated by the handover command.

### 3. Dual active protocol stack (Dual Active Protocol Stack, DAPS) handover

A DAPS handover mechanism can reduce handover interruption time. The handover interruption time is a time period in which UE cannot perform data transmission with any base station during handover. For example, a source base station indicates a target cell to the UE by using an RRC reconfiguration message including a handover command. The UE accesses the target cell based on content included in the handover command. During handover execution (in other words, during access to the target cell), the UE continues to perform data transmission with a source cell until the UE establishes a connection to the target cell for data transmission. Specifically, in a short time, the UE may receive and send data with the source cell and the target cell simultaneously.

The UE continues to receive downlink data from the source cell until the target cell indicates the UE to release the source cell.

The UE continues to send uplink user data to the source cell until random access to the target cell succeeds.

The DAPS handover has a high requirement on a capability of the UE. From the perspective of the UE, there are two active protocol stacks in a DAPS handover process. One active protocol stack is used to transmit and receive user plane data of the target cell, and the other active protocol stack is used to transmit and receive user plane data of the source cell. A common PDCP entity is used for a user plane protocol stack on a source side and a user plane protocol stack on a target side, so that the source side and the target side have a common reordering and deduplication function.

### 4. Random access (random access, RA)

Random access is a mandatory step for UE to connect to a network. A terminal device and a network device establish a radio link through an RA procedure, to implement uplink synchronization. After the RA is successfully completed, the UE and a base station perform normal data transmission. The UE can achieve the following objectives through random access: obtaining uplink synchronization, obtaining an uplink resource (UL grant), and obtaining a unique cell radio network temporary identifier (Cell Radio Network Temporary Identifier, C-RNTI).

RA includes 4-step contention based random access (4-step contention based random access, 4-step CBRA), 4-step contention free random access (4-step contention free random access, 4-step CFRA), 2-step contention based random access (2-step contention based random access, 2-step CBRA), and 2-step contention free random access (2-step contention free random access, 2-step CFRA). The following specifically describes procedures of 4-step CBRA and 2-step CBRA.

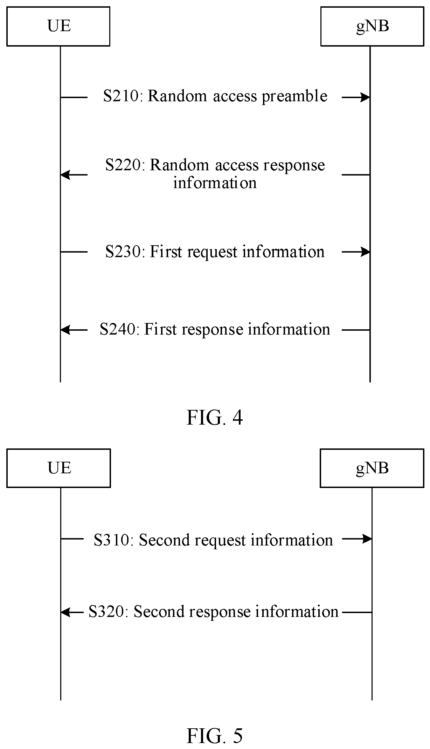

FIG. 4 is a schematic flowchart of 4-step CBRA according to an embodiment of this application. For ease of understanding, an example in which a terminal device is UE and a network device is a gNB is used. Details are shown in FIG. 4.

S410: The UE sends a random access preamble (preamble) to the gNB.

Specifically, the UE sends the preamble (preamble) to the gNB on a physical random access channel (physical random access channel, PRACH) resource, for example, a random access channel occasion (RACH Occasion).

For example, the gNB notifies, by using a system message, the UE of a time-frequency resource set of a PRACH that can be used to transmit the preamble in a current cell. When initiating random access, the UE further needs to select a PRACH resource for (CBRA) or (CFRA) specified by a base station, to send the preamble.

S420: The gNB sends random access response information to the UE.

Specifically, after the gNB receives the preamble from the UE, the gNB sends the random access response (random access response, RAR) information to the UE. The RAR may indicate a resource location of a physical uplink shared channel (physical uplink shared channel, PUSCH).

The random access response information may be referred to as a message 2 (msg2) below for short, may include a preamble identifier, timing advance (timing advance, TA) information, and initial uplink grant (uplink grant, UL grant) information, and may further carry a temporary identifier of the UE.

S430: The UE sends first request information to the gNB.

Specifically, based on the resource location of the PUSCH indicated in the random access response information received from the gNB, the UE sends the first request information to the gNB through the PUSCH.

Optionally, the first request information includes an RRC setup request (RRC Setup Request) message or an RRC resume request (RRC Resume Request) message.

The first request message is referred to as a message 3 (msg3) below for short. That is, the UE sends the msg3 based on the UL grant information indicated in the RAR. The msg3 may include L2 or L3 information, for example, a BFR MAC CE or an RRC message. The msg3 may include identification information of the UE, for example, C-RNTI information of the UE, a resume identifier (Resume ID) of the UE, or an inactive identifier (Inactive RNTI, I-RNTI).

S440: The gNB sends first response information to the UE.

Specifically, after the gNB receives the first request information from the UE, the gNB sends the first response information to the UE.

Optionally, the first response information includes one or more of the following: an RRC setup (RRC Setup) message, an RRC resume (RRC Resume) message, an acknowledgement (acknowledgement, ACK)/a negative acknowledgement (negative acknowledgement, NACK) of the physical uplink shared channel (physical uplink control channel, PUSCH) in the first request information, a power control command, and the like.

That is, because the UE carries the identification information of the UE in step 430, if contention resolution of the UE succeeds, the gNB sends a contention resolution message to the UE, where the contention resolution message includes the identification information of the UE.

FIG. 4 mainly describes a specific procedure of information exchange between the UE and the gNB in 4-step contention based random access (4-step CBRA).

FIG. 5 is a schematic flowchart of 2-step CBRA according to an embodiment of this application. For ease of understanding, an example in which a terminal device is UE and a network device is a gNB is used. Details are shown in FIG. 5.

S510: The UE sends second request information to the gNB.

Specifically, the UE sends the second request information to the gNB on a PRACH resource, and sends uplink data to the gNB on a PUSCH.

Optionally, the second request information includes a preamble, an RRC setup request (RRC Setup Request) message, or an RRC resume request (RRC Resume Request) message.

That is, the UE sends a msgA, including a 2-step RACH preamble and data sent on a PUSCH corresponding to the preamble.

S520: The gNB sends second response information to the UE.

Specifically, after the gNB receives the second request information from the UE, the gNB sends the second response information to the UE.

Optionally, the second response information includes one or more of the following: an RRC setup (RRC Setup) message, an RRC resume (RRC Resume) message, an acknowledgement ACK/a NACK of the PUSCH in the second request information, a power control command, and the like. That is, the UE receives a msgB. If contention resolution succeeds, the UE terminates the RACH process.

Specifically, the msgB usually includes RARs of one or more users, and the RARs are classified into SuccessRAR and FallbackRAR. A MAC layer indicates a specific RAR. It may be understood that the indication may be referred to as a fallback indication. If the SuccessRAR carries a contention resolution ID, it indicates that the gNB detects the preamble and correctly decodes the data. If the CR ID is consistent with content sent by the UE in the msgA, it is considered that contention resolution succeeds. A format of the FallbackRAR is similar to that of a msg2, and it indicates that the gNB detects the preamble but does not correctly decode the data.

FIG. 5 mainly describes a specific procedure of information exchange between the UE and the gNB in 2-step contention based random access (2-step CBRA).

### 5. L1/L2 signaling triggered mobility (L1/L1 triggered mobility, LTM)

An LTM technology can also reduce handover interruption time. Specifically, a network device sends, to UE in advance, an RRC reconfiguration message that includes configuration information of a plurality of candidate cells. The candidate cells may be cells managed by a same CU of the network device, or may be cells managed by different CUs on a network side. The UE stores the configuration information of the plurality of candidate cells. The UE reports a layer 1 measurement report to the network device. The network device indicates, by using an L2 switch command (MAC CE), the UE to switch to a target cell (cell switch). The UE switches to the target cell (cell switch) based on stored configuration information of the target cell, and stores configuration information of one or more candidate cells to support continuous switch. LTM supports early TA acquisition, RACH-less access, and an LTM supervision timer (also referred to as a third timer in embodiments of this application). In addition, a 304 timer is enhanced based on LTM scenarios.

### 6. Mobility robustness optimization (mobility robustness optimization, MRO)

Currently, a system supports an MRO mechanism, to reduce problems such as too early handover, unnecessary handover, too late handover, and ping-pong handover in handover such as intra-frequency handover, inter-frequency handover, and inter-RAT handover caused by inappropriate network parameter settings. MRO is an important mechanism for network self-optimization. When a mobility-related exception (for example, a radio link failure, a handover failure, or a radio link failure in a target cell) occurs on a terminal device, the terminal device reports a mobility-related exception parameter to a network device, and the network device may perform autonomous analysis and optimize a network parameter based on the related parameter reported by the terminal device. For example, MRO adjusts a mobility parameter based on a report, for example, a radio link failure report (radio link failure report, RLF report) and a successful handover report (Successful Handover Report, SHR), reported by the terminal device to the network device. The mobility parameter is a parameter that may be used in a handover determining process, for example, a handover threshold.

### 7. RLF report

A terminal device typically records an RLF report in the following two cases.
1. The terminal device does not receive a handover message (for example, in a conventional handover or DAPS handover scenario), or the terminal device receives a CHO configuration but does not trigger execution, and a radio link failure (radio link failure, RLF) occurs.
2. The terminal device performs handover (for example, conventional handover, CHO, or DAPS handover), but the terminal device fails to access a target cell or an RLF occurs shortly after the terminal device accesses a target cell.

The RLF report includes at least one of the following information:
(1) failedPcellID: indicates identification information of a cell in which UE detects an RLF, or identification information of a target cell for which handover fails;
(2) connectionFailureType: indicates a type of a connection failure, such as RLF or HOF;
(3) previousPCellId: indicates identification information of a source cell for which the UE receives a handover command previous time;
(4) reestablishmentCellId: indicates identification information of a cell for initiating reestablishment after a connection failure;
(5) timeConnFailure: indicates the time elapsed since a last HO command reception until a connection failure;
(6) timeSinceFailure: indicates the time elapsed since a connection failure, typically refers to the time to reporting of an RLF report since a connection failure; or
(7) rlf-Cause: indicates the cause of a radio link failure or a handover failure, for example, T310 expiry, T312 timer expiry, a random access problem, a beam failure recovery failure, an LBT failure, or an excessive quantity of RLC retransmissions.

The T310 timer is used as an example for description. When a quantity of downlink out-of-synchronization indications (out of sync) continuously received by an RRC layer of the UE from a physical layer of the UE is equal to N310, the T310 timer is started. During running of the T310 timer, if the UE detects that a radio link is recovered (that is, a quantity of downlink synchronization indications (in sync) continuously received from the physical layer of the UE is equal to N311) or receives/executes an RRC reconfiguration message having a synchronization function, the T310 timer is stopped. Otherwise, the timer runs until the timer expires, and RRC reestablishment is initiated once the timer expires.

When running time of the T310/T312 timer reaches a specific threshold A, the UE considers that a radio link failure occurs. When running time of a T304 timer reaches a specific threshold B, the UE considers that a handover failure occurs. Therefore, if a running time threshold of T304/T310/T312 for triggering the UE to record an SHR is less than or equal to a specific threshold C, that is, a failure threshold, and is greater than or equal to a specific threshold D, the UE considers that a potential problem exists. Herein, a value of the specific threshold A is greater than a value of the specific threshold B, and a value of the specific threshold C is greater than a value of the specific threshold D.

The three timers T304/T310/T312 are defined as follows:
T304 timer: Running duration of the T304 timer indicates duration from a time point when a terminal device receives an RRC reconfiguration message to a time point when the terminal device successfully completes random access to a target network device. The terminal device starts the T304 timer when receiving the RRC reconfiguration message, and stops the timer when random access is completed.

T310 timer: is also referred to as a first timer in embodiments of this application. Running duration of the T310 timer indicates duration in which a terminal device detects a physical layer problem (physical layer problems) with a source network device. The problem is usually that a quantity of continuously received downlink out-of-synchronization indications exceeds a specific threshold. After the T310 timer is started, the T310 timer is stopped if a radio link is recovered during running of the T310 timer.

T312 timer: is also referred to as a second timer in embodiments of this application. The T312 timer is started during running of the T310 timer. Running duration of the T312 timer indicates duration from a time point when a terminal device triggers a measurement report (usually) to a time point when the terminal device restores synchronization with a source network device during running of the T312 timer.

Specifically, an example of start time, stop time, and processing after expiry of the foregoing three timers is shown in Table 2.

**Table 2: Timer function**

| Timer | Start | Stop | Expiry |
|---|---|---|---|
| T304 | When an RRC reconfiguration message having a synchronization function is received or applied | When random access in an SpCell is completed; or when an SCG is released in terms of T304 of the SCG | For T304 of a master cell group (master cell group, MCG): RRC reestablishment is initiated, and MCG failure information sending is initiated; |
| | | | if DAPS handover is performed and no RLF occurs in a source cell, a failure information procedure is initiated; or |
| | | | for T310 of a secondary cell group (secondary cell group, SCG): SCG failure message sending is initiated |
| T310 | When a physical layer problem (a quantity of continuously received downlink out-of-synchronization indications exceeds a specific threshold) of a special cell (SpCell) is detected, where the SpCell refers to a PCell of an MCG or a PSCell of an SCG in dual connectivity; or refers to a PCell in a case of no dual connectivity | When a quantity of downlink synchronization indications continuously received from a physical layer of a special cell is equal to a specific threshold; when an RRC message having a synchronization function is received or applied; when a handover command is received; when a timer parameter reconfiguration is received; when RRC reestablishment is initiated; when MCG failure information sending is initiated; or when an SCG is released in terms of T310 of the SCG | For T310 of an MCG: RRC reestablishment is initiated, and MCG failure information sending is initiated; or |
| | | | for T310 of an SCG, SCG failure message sending is initiated |
| T312 | When UE sends a measurement report during running of the T310 timer | When a quantity of downlink synchronization indications continuously received from a physical layer of a special cell is equal to a specific threshold; when an RRC reconfiguration message having a synchronization function is received or applied; when a handover command is received; when a timer parameter reconfiguration is received; when RRC reestablishment is initiated; when MCG failure information sending is initiated; or when an SCG is released in terms of T310 of the SCG | For T310 of an MCG: RRC reestablishment is initiated, and MCG failure information sending is initiated; or |
| | | | for T310 of an SCG, SCG failure message sending is initiated |

When a connection failure (such as a radio link failure or a handover failure) occurs on UE, the UE records an RLF report. When a connection failure occurs again on the UE, the UE clears the previously recorded RLF report and records a latest RLF report. A mechanism for reporting the RLF report is delayed reporting. For example, the UE records the RLF report. After the UE accesses a network device, a network has a mechanism to request, by using a UE information request (UEInformationRequest) message, the UE to report the RLF report. The UE sends the RLF report to the network device by using a UE information response (UEInformationResponse) message, so that the network device identifies a mobility process problem and optimizes a mobility parameter.

In the conventional technology, to avoid an RA failure caused by inappropriate configuration of the network device, the UE records information in an RA process, and generates a corresponding RA report. When the UE initiates random access, the UE records the RA report. Different from recording connection failure process information in the RLF report, the UE can record the RA report without detecting an RA failure.

The RA report is used by the UE to record related parameters in a random access procedure of the UE, mainly including identification information of a random access cell (identification information of a cell for which the UE sends a random access preamble or identification information of an SpCell cell in a cell group), a cause of the random access procedure (for example, a need to access a cell, uplink out-of-synchronization, or a system message request), and an information element RA-InformationCommon indicating that one or more pieces of 2-step and/or 4-step random access related information are recorded.

RA-InformationCommon includes the following: frequency information, PRACH resource time-frequency domain information, a subcarrier spacing, a maximum quantity of times of sending a msgA, RSRP of a downlink reference signal measured during 2-step/4-step selection, random access attempt information including a beam number and a quantity of preambles sent on a beam, a conflict detection indication, and one or more of indication information indicating whether a 4-step/2-step RSRP threshold is reached, fallback indication information from 2-step to 4-step, an amount of data to be transmitted in 2-step random access, and physical uplink shared channel PUSCH configuration information in 2-step random access.

Currently, the RLF report covers conventional handover, CHO, and DAPS mobility scenarios and records process information of a radio link failure or a handover failure in the foregoing scenarios, but cannot support LTM scenarios. For example, in the LTM scenarios, the UE does not feed back information related to a handover failure or a radio link failure currently.

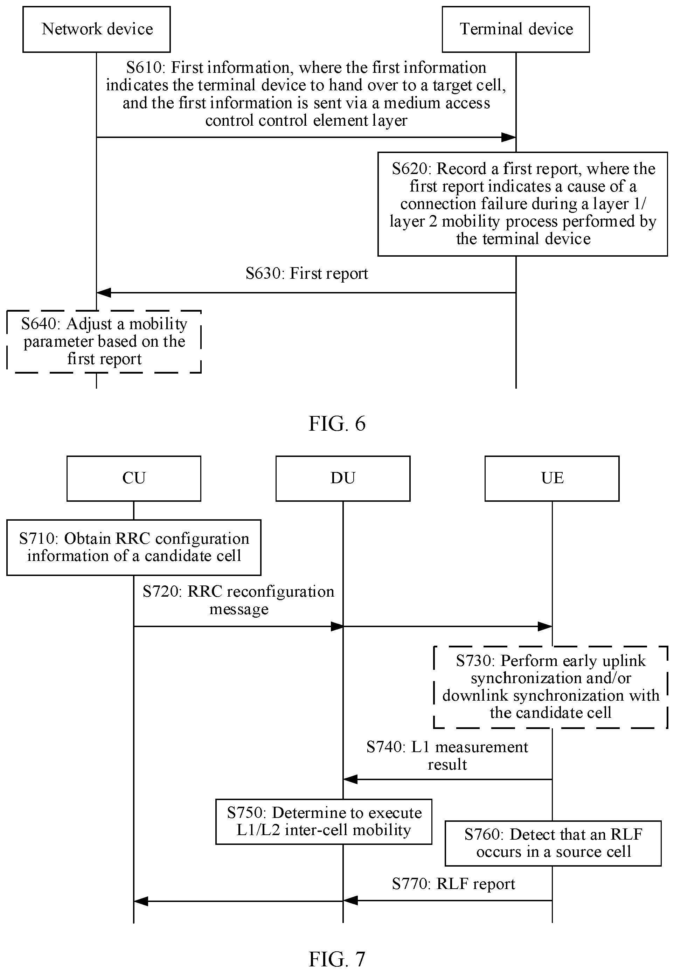

In view of this, an embodiment of this application provides a communication method. The method can enable UE to feed back information about a radio link failure to a network device. The following describes the communication method by using a terminal device and a network device as interaction bodies. As shown in FIG. 6, the method includes the following steps.

S610: The network device sends first information to the terminal device, and correspondingly, the terminal device receives the first information.

The first information indicates the terminal device to hand over to a target cell. For example, the first information indicates an index (index) of the target cell. Alternatively, the first information indicates a predefined number of the target cell. For example, if a number corresponding to a cell A is predefined as 1, a number corresponding to a cell B is predefined as 2, and a number corresponding to a cell C is predefined as 3, the first information indicates the number 1, that is, indicates the cell A.

It should be understood that the index of the cell and the predefined number of the cell are merely used as an example for cell identification but not a limitation. Other manners that can identify or distinguish between different cells should also fall within the protection scope of this application. The first information may be sent via a medium access control control element.

The target cell is one of at least one candidate cell, and configuration information of the at least one candidate cell may be received by the terminal device in advance. For example, the network device sends the configuration information of the at least one candidate cell to the terminal device, and the terminal device receives the configuration information. Optionally, the terminal device may further store the configuration information.

S620: The terminal device records a first report.

The first report indicates a cause of a connection failure during a layer 1 or layer 2 mobility process performed by the terminal device.

The connection failure includes two cases. The following describes the first report for different cases.

Case 1: radio link failure between the terminal device and a source cell.

The first report indicates a cause of the radio link failure, and the cause of the radio link failure includes at least one of the following:
a first timer expires, that is, running duration of the first timer is greater than or equal to a first threshold, where the running duration of the first timer is duration from a time point when the terminal device detects a physical layer out-of-synchronization problem with a source network device to a time point when the terminal device receives the first information; or
a second timer expires, that is, running duration of the second timer is greater than or equal to a second threshold, where the running duration of the second timer is duration from a time point when the terminal device triggers measurement report transmission to the time point when the terminal device receives the first information during running of the first timer.

For the first timer, refer to the foregoing descriptions of the T310 timer. For the second timer, refer to the foregoing descriptions of the T312 timer. Details are not described herein. It should be noted that the first timer may be an enhancement made based on the T310 timer, or may be a newly designed timer different from the T310 timer. When the first timer is a newly designed timer different from the T310 timer, and the first timer is configured, the terminal device may release, delete, or deactivate (a configuration of the T310/T312 timer is stored, but the timer is not run) the configured T310 timer. The second timer is similar to the T320 timer, and details are not described. The cause of the radio link failure further includes at least one of: a random access failure, a beam failure recovery failure, a listen before talk failure, or a quantity of radio link control layer protocol retransmissions being greater than or equal to a fifth threshold.

The first threshold, the second threshold, and the fifth threshold may be predefined, or may be configured by a network side for the terminal device.

It should be understood that the quantity of radio link control layer protocol retransmissions may be replaced with other parameters, for example, a total quantity of radio link control layer protocol transmissions, all of which shall fall within the protection scope of this application. For example, a quantity 3 of RRC retransmissions has a same meaning as a total quantity 4 of RRC transmissions. The first report further indicates information about a first candidate cell, the information about the first candidate cell includes at least one of: identification information of the first candidate cell, whether a random access response RAR is configured for the first candidate cell, or layer 1 reporting configuration information corresponding to the first candidate cell, and the first candidate cell is one or more of the at least one candidate cell. In other words, the first report indicates information about one or more of the at least one candidate cell.

The first report further indicates early timing advance (early TA) information, and the early timing advance information includes at least one of: whether the terminal device performs early timing advance in the target cell, a candidate cell for performing the early timing advance, a quantity of physical downlink control link orders for indicating to perform the early timing advance in the candidate cell, physical random access channel resource information, a synchronization signal block beam identifier, or a preamble identifier.

The first report further indicates radio link failure information of the source cell, and the radio link failure information of the source cell includes at least one of: a layer 1 measurement result or a layer 3 measurement result that is available upon detecting a failure, a connection failure type being radio link failure, a cell in which a radio link failure occurs being the source cell, or duration from a time point when the terminal device receives the configuration information of the at least one candidate cell to a time point when the terminal device detects the radio link failure of the source cell.

Case 2: handover failure of the terminal device or handover failure within a first time period after a handover success.

The first time period may be predefined or configured.

In other words, handover of the terminal device fails or a failure occurs immediately after handover succeeds. In this case, the cause of the connection failure is the handover failure.

The first report may indicate information about a first candidate cell and/or early timing advance information. For details, refer to the descriptions in Case 1.

The first report may further indicate at least one of the following:
an identifier of the target cell;
whether the target cell has an available timing advance value;
an access type used by the terminal device to access the target cell, where for example, the access type is random access free or random access, or the access type is random access free; or whether the access type is random access free;
beam indication information used for uplink or downlink data transmission in the target cell;
an identifier of a first cell, where the first cell is a cell having an available timing advance value, and the first cell is one or more of the at least one candidate cell; or
first time information, where the first time information includes at least one of the following:
   duration from a time point when the terminal device receives the configuration information of the at least one candidate cell to a time point when the terminal device receives the first information or a time point when the terminal device initiates cell switch;
   duration from a time point when the terminal device receives a 1^{st} physical downlink control channel PDCCH order to a time point when the terminal device receives the first information or a time point when the terminal device initiates cell switch; or
   duration from a time point when the terminal device receives a last physical downlink control channel PDCCH order to a time point when the terminal device receives the first information or a time point when the terminal device initiates cell switch.

Optionally, the first report further indicates at least one of the following:
a connection failure type, where for example, the connection failure type is handover failure or radio link failure;
a cause of the handover failure, including at least one of the following:
   a third timer expires, that is, running duration of the third timer is greater than or equal to a third threshold, where
   the running duration of the third timer is duration from the time point when the terminal device receives the first information to a time point when the terminal device completes random access or a time point when the terminal device sends a 1^{st} piece of uplink data; or
   a fourth timer expires, that is, running duration of the fourth timer is greater than or equal to a fourth threshold, where the running duration of the fourth timer is duration from a time point when the terminal receives or executes an RRC reconfiguration message having a synchronization function to a time point when the terminal device completes random access or a time point when the terminal device receives a physical control channel transmission after a 1^{st} uplink transmission during random access free, and the RRC reconfiguration message having the synchronization function is an RRC reconfiguration message including reconfigurationWithSync, where
   the third threshold and/or the fourth threshold may be predefined or configured;
   a type of a handover being layer 1 or layer 2 mobility switch;
   detecting that a cell in which a connection failure occurs is the target cell;
   second time information, where the second time information includes duration from a time point when the terminal device receives a previous layer 1 or layer 2 mobility command to a time point when a cell switch failure occurs or a time point when the terminal device sends the first report; or the second time information includes duration from a time point when the terminal device initiates cell switch to a time point when a cell switch failure occurs or a time point when the terminal device sends the first report;
   the running duration of the third timer;
   the running duration of the fourth timer;
   a layer 1 measurement result or a layer 3 measurement result that is available upon detecting a failure, where
   it should be understood that all other manners that can determine whether running duration of a timer expires shall fall within the protection scope of this application, for example, other operations or processing that can determine a value relationship through comparison, such as multiplication, subtraction, addition, or taking the logarithm; or
   random access-based cell switch process information, where the random access-based cell switch process information includes information about a 2-step random access procedure and/or a 4-step random access procedure, and for details, refer to the foregoing descriptions of the 2-step random access procedure and/or the 4-step random access procedure.

It should be understood that there may be three manners of indicating "whether" in this application. One manner is indicating true (true), another manner is indicating false (false), and still another manner is indicating true or false (true or false). For example, for whether the terminal device performs the early timing advance in the target cell, one manner is indicating that the terminal device performs the early timing advance in the target cell only when the terminal device performs the early timing advance in the target cell. Another manner is indicating that the terminal device does not perform the early timing advance in the target cell only when the terminal device does not perform the early timing advance in the target cell. Still another manner may be indicating that the terminal device performs the early timing advance in the target cell or indicating that the terminal device does not perform the early timing advance in the target cell. For other content indicating "whether" in this specification, for example, "whether a neighboring cell belongs to one or more candidate cells", refer to the explanation herein.

In addition, it should be further noted that, in this application, a case of indicating "A or B" may be indicating A or B, or indicating A, or indicating whether A or not, or indicating B, or indicating whether B or not. For example, indicating the access type of the terminal device may be indicating random access free or random access; or may be indicating random access free; or may be indicating whether random access free or not; or may be indicating random access; or may be indicating whether random access or not. "Not random access" may be understood as "random access free".

S630: The terminal device sends the first report to the network device, and correspondingly, the network device receives the first report.

Optionally, the method may further include the following step.

S640: The network device adjusts a mobility parameter based on the first report.

For example, the network device performs analysis based on the first report, and correspondingly optimizes an LTM process and related parameters, for example, indicates a more appropriate target cell for the terminal device, to prevent the terminal device from switching to an inappropriate cell. Alternatively, the terminal device may be indicated to perform cell switch (cell switch) at more appropriate time, to prevent the terminal device from performing too early or too late switch, reduce a probability of a switch failure or a radio link failure, and reduce impact of data transmission interruption time on user experience.

In the method, when a connection failure occurs in LTM scenarios, the terminal device can report a cause of the connection failure to the network device by using the first report. Further, the terminal device may further report, in the first report, other related information in a mobility process, so that the network device optimizes related parameters, to reduce an interruption delay caused by the connection failure.

For ease of clearly understanding the solutions in this application, an example in which a gNB-CU serves as the network device and UE serves as the terminal device is used below to provide two procedure examples to which the foregoing technical solutions are applicable.

An implementation is shown in FIG. 7, which is an implementation procedure of Case 1. The procedure includes the following steps.

S710: The CU obtains RRC configuration information of a candidate cell.

Optionally, the gNB-CU determines, based on a measurement report that includes an L3 measurement result and that is received from the UE, to initiate an LTM (L1/L2 triggered mobility) procedure.

It should be noted that the candidate cell may be a cell managed by a source CU, or may be a cell managed by another CU. In these two cases, information receiving and sending of the CU vary. Details are as follows.

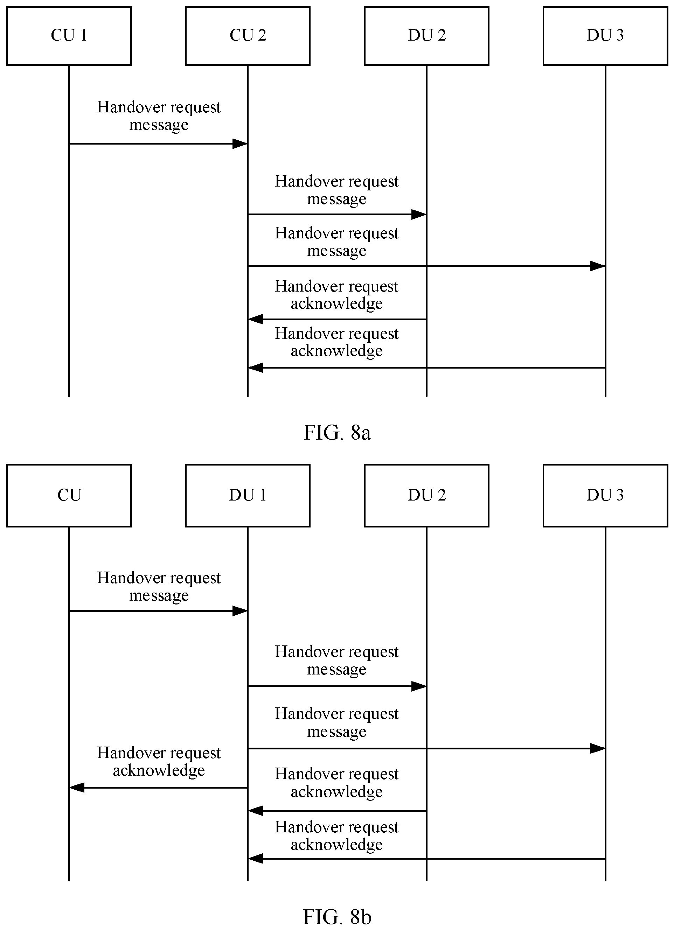

In an inter-CU (inter-CU) case, that is, if the candidate cell is a cell managed by another CU, as shown in FIG. 8a, the source CU (CU 1) sends a handover request message to a candidate CU (CU 2), where the message indicates the candidate cell. For example, a cell identifier of the candidate cell is carried. The candidate CU (CU 2) indicates the candidate cell to a managed candidate DU (for example, a DU 2 and a DU 3). If the candidate DU accepts the request, a lower-layer RRC configuration of the candidate cell is sent to the candidate CU to which the DU belongs. For example, a handover request acknowledge is sent, and the handover request acknowledge carries the RRC configuration of the candidate cell.

In a non-inter-CU case (Intra-CU), that is, if the candidate cell is a cell managed by the CU, as shown in FIG. 8b, the CU indicates the candidate cell to a managed candidate DU (for example, a DU 1, a DU 2, and a DU 3). For example, a handover request message is sent, and the handover request message carries an identifier of the candidate cell. If the candidate DU accepts the request, lower-layer RRC configuration information of the candidate target cell is sent to the CU. For example, a handover request acknowledge is sent, and the handover request acknowledge carries the RRC configuration of the candidate cell.

The candidate cell may be the at least one candidate cell described above.

S720: The CU sends an RRC reconfiguration message to the UE through the DU, and correspondingly, the UE receives the RRC reconfiguration message.

The RRC reconfiguration message includes L1/L2 mobility configuration information, the L1/L2 mobility configuration information may include configuration information of one or more candidate cells, the L1/L2 mobility configuration information may further include whether an RAR is configured for the candidate cell, and the L1/L2 mobility configuration information further includes L1 measurement control information.

To reduce time of data interruption between the UE and the source cell caused due to CFRA between the UE and the target (candidate) cell, LTM supports the UE in performing early uplink synchronization with the candidate cell. After the UE sends a preamble to the candidate cell, the UE receives an RAR from the source cell or does not receive an RAR. Whether the UE receives the RAR is configured by a network side. For example, the network device indicates, to the UE, whether an RAR is configured for each of the one or more candidate cells. If no RAR is configured for the candidate cell, when an LTM command (that is, an example of the first information) indicates that the candidate cell is a target cell, the LTM command further indicates a TA value of the target cell.

The UE may record an RLF report, and the RLF report may indicate information about an LTM candidate cell, for example, indicate cell identification information, whether an RAR is configured for the candidate cell, and L1 reporting configuration information (for example, an SSB set corresponding to an RS of the candidate cell). An L1 measurement result may not include beam identification information, and the network side obtains beam-level L1 RSRP of the candidate cell with reference to the L1 reporting configuration information and the L1 measurement result.

Optionally, in S730, the UE performs early uplink synchronization and/or downlink synchronization with the candidate cell.

For example, before the UE receives the LTM command, a serving DU of the UE may trigger the UE to perform early TA acquisition for the candidate cell. Specifically, the serving DU indicates a contention free random access CFRA resource, such as an SSB beam, a PRACH resource, and/or a preamble identifier, to the UE by using a PDCCH order (order), and the serving DU further indicates an ID of the candidate cell to the UE.

The UE sends a random access preamble to the candidate cell. The UE performs cell search to achieve early downlink synchronization with the candidate cell.

For example, the UE performs early uplink synchronization and/or downlink synchronization with the candidate cells DU 2 and DU 3.

The UE may record an RLF report, and the RLF report may indicate one or more pieces of early TA-related information, for example, whether the UE performs early TA, a candidate cell for performing early TA, a quantity of PDCCH orders indicating the candidate cell, PRACH resource time-frequency domain information, SSB beam identification information, or preamble identification information.

In a possible manner, the foregoing early TA-related information is indicated in an RA report.

S740: The UE sends the L1 measurement result to the DU, and correspondingly, the DU receives the L1 measurement result.

S750: The DU determines to execute L1/L2 inter-cell mobility.

S760: The UE detects that an RLF occurs in the source cell.

The UE may record an RLF report, and the RLF report indicates one or more of the following RLF information of the source cell: an L1 measurement result/L3 measurement result that is available upon detecting a failure; a connection failure type being RLF; a cell in which a failure occurs being the source cell; an RLF cause (for example, the first timer and/or the second timer expire/expires); or duration from a time point when the terminal device receives a preconfiguration of the LTM candidate cell to a time point when an RLF is detected.

Particularly, step S760 is performed before the LTM command is received. In other words, before receiving the LTM command sent by the DU to the UE, the UE detects that an RLF occurs in the source cell.

S770: The UE sends the RLF report to the CU through the DU, and correspondingly, the CU receives the RLF report.

It should be understood that, for the RLF report in this implementation, refer to the descriptions in Case 1 above.

In this implementation, the UE reports a failure cause and related information to the network device in a timely manner when a connection failure occurs in the source cell, so that the network side can analyze the failure cause of the RLF in the source cell, thereby optimizing a mobility parameter, and reducing a probability that the UE encounters an RLF in the source cell due to too late switch (cell switch).

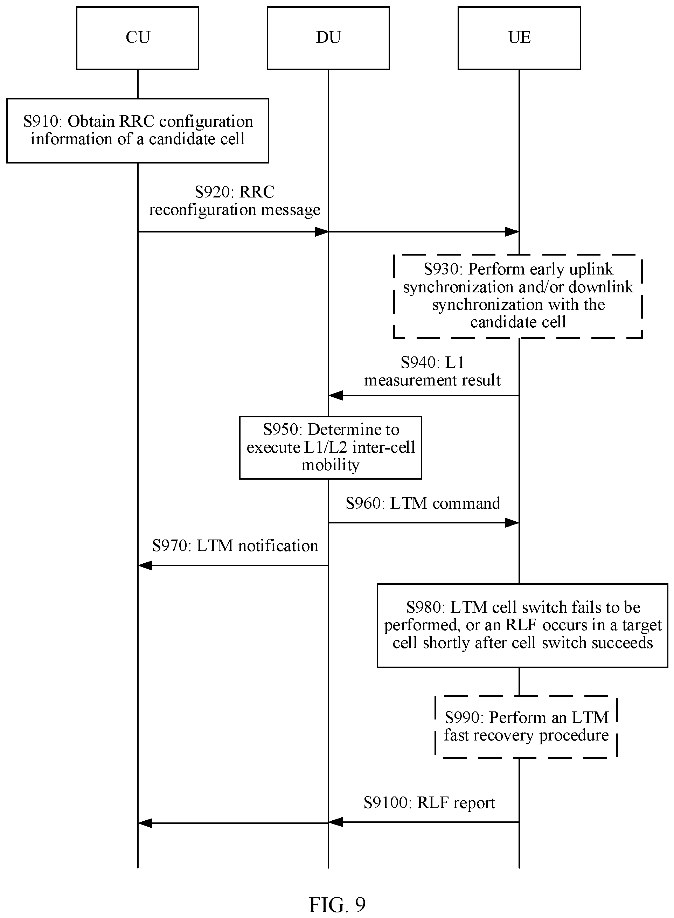

An implementation is shown in FIG. 9, which is an implementation procedure of Case 2. The procedure includes the following steps.

S910: The CU obtains RRC configuration information of a candidate cell.

S920: The CU sends an RRC reconfiguration message to the UE through a DU, and correspondingly, the UE receives the RRC reconfiguration message.

Optionally, in S930, the UE performs early uplink synchronization and/or downlink synchronization with the candidate cell.

S940: The UE sends an L1 measurement result to the DU, and correspondingly, the DU receives the L1 measurement result.

S950: The DU determines to execute L1/L2 inter-cell mobility.

Specifically, for S910 to S950, refer to the descriptions of S710 to S750.

Particularly, in S930, a cell for performing early TA may be a target cell, or may be a candidate cell for performing early TA, and whether the candidate cell is a target cell may be indicated in the candidate cell.

S960: The DU sends an LTM command to the UE, and correspondingly, the UE receives the LTM command.

The LTM command includes identification information of the target cell. In a possible manner, the LTM command may be sent to the UE via a MAC CE. In another possible manner, the LTM command may be other information from L1/L2.

Optionally, before the DU sends the LTM command, the UE sends the L1 measurement result to the DU. The DU determines the target cell based on the L1 measurement result, and sends the LTM command to the UE, to indicate the target cell by using the LTM command.

It should be understood that, in this embodiment of this application, a sequence in which the UE performs early uplink synchronization or early downlink synchronization and the UE reports the L1 measurement result is not limited.

The LTM command may further include a TA value of the target cell, and the LTM command may further include information about a beam used for uplink/downlink data transmission in the target cell.

The UE may perform cell switch (cell switch) according to the LTM command. Specifically, the UE applies configuration information of the target cell. If the UE obtains the TA value (an available TA value) of the target cell, the UE performs random access free (RACH-less) to access the target cell; otherwise, the UE initiates random access to the target cell.

The UE obtains the TA value of the target cell in the following manners.

Manner 1: If the target cell is configured with an RAR, the UE receives the TA value of the target cell by using the RAR before the LTM command. For example, the RAR may be sent by the current DU to the UE, or may be sent from the target cell to the UE. This is not limited.

Manner 2: If the target cell is not configured with an RAR, the TA value of the target cell is indicated in the LTM command.

The UE may record an RLF report, and the RLF report may indicate one or more pieces of information related to the LTM command:
indicating the identification information of the target cell;
indicating whether the target cell has an available TA value; or indicating RACH-less or RACH-based access; or indicating only that the target cell has an available TA value, or indicating only RACH-less access;
indicating beam indication (Beam indication) information used for uplink/downlink data transmission in the target cell;
indicating identification information of a cell that has an available TA value; or
indicating an item of first time information (candidate cell configuration information/duration from a time point when the UE receives a 1^{st} PDCCH order/the UE receives a last PDCCH order to a time point when the LTM command is received/cell switch is initiated). In a possible implementation, an RA report may also indicate the foregoing information related to the LTM command.

S970: The DU sends an LTM notification to the CU, and correspondingly, the CU receives the LTM notification.

The LTM notification is used to notify the CU of initiation of the LTM command. Optionally, the LTM notification further includes the identification information of the target cell.

S980: The UE fails to perform LTM cell switch, or an RLF occurs in the target cell shortly after successful cell switch.

For example, the UE performs cell switch in a random access free or random access based manner. In other words, a type of cell switch includes random access free or random access based.

In a possible implementation, the UE may detect a cell switch status based on the foregoing third timer and/or fourth timer. The cell switch status includes a cell switch success or a cell switch failure. When cell switch fails, for RACH-less access, the UE considers that a network side does not receive initial uplink data during running of the third timer, or the UE considers that a downlink physical control channel transmission is not received after a 1^{st} uplink transmission is sent during running of the fourth timer; and for random access, the UE considers that random access fails (for example, a maximum quantity of preamble transmissions is reached, the third timer expires, or the fourth timer expires).

When the first timer expires, the UE may record a first report (for example, an RLF report). The first report may indicate one or more pieces of cell access related information:
a connection failure type being HOF/RLF;
a type of a handover being LTM;
a cell in which a failure occurs being the target cell;
second time information, including duration from a time point when a previous LTM command is received/cell switch is initiated to a time point when a cell switch failure occurs/a report is reported;
running duration of the third timer;
running duration of the fourth timer;
an L1 measurement result/L3 measurement result that is available upon detecting a failure;
whether the third timer expires;
whether the fourth timer expires; or
random access-based cell switch process information, indicating that 2-step and/or 4-step random access related information is recorded, as described in the foregoing ra-InformationCommon information element. Optionally, if the cell is already recorded in early TA, PRACH resource information is not repeatedly recorded.

In a possible implementation, the foregoing random access-based cell switch process information may also be indicated in the RA report.

Optionally, in S990, the UE performs an LTM fast recovery procedure.

If cell switch in S980 fails or shortly after a radio link failure RLF occurs in the target cell, the UE may access a candidate cell through the LTM fast recovery procedure.

In a possible manner, the UE performs cell selection, and a selected cell is the foregoing candidate cell. The UE accesses the candidate cell in a random access manner or a random access free manner (the same as the foregoing cell switch process) by applying stored configuration information of the candidate cell.

In another possible manner, if a cell selected by the UE is not a candidate cell, or a cell selected by the UE is not among candidate cells configured by the network side, the UE initiates an RRC reestablishment procedure.

It should be understood that, that the UE successfully performs the LTM fast recovery procedure, that is, the UE successfully accesses the candidate cell through the LTM fast recovery procedure, may also be considered as a scenario in which LTM cell switch succeeds.

The UE performs the LTM fast recovery procedure. The RLF report may include information related to the fast recovery procedure. The RLF report may include information about one or more candidate cells for fast recovery, and/or duration from a time point when handover of the UE fails to a time point when the UE successfully accesses a candidate cell.

S9100: The UE sends the RLF report to the CU through the DU, and correspondingly, the CU receives the RLF report.

Specifically, for content included in the RLF report, refer to the descriptions in Case 2 above. Details are not described again.

In this implementation procedure, the UE may record information related to a failure of cell switch performed by the UE or a failure that occurs shortly after successful switch in LTM scenarios, so that the network side can analyze a cause of a failure in accessing the target cell or a failure in the target cell, thereby optimizing a corresponding mobility parameter, and reducing a probability of too early switch or switch to a wrong cell.

It may be understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that, in the foregoing method embodiments, the method and the operation implemented by the communication device may also be implemented by a component (for example, a chip or a circuit) of the communication device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

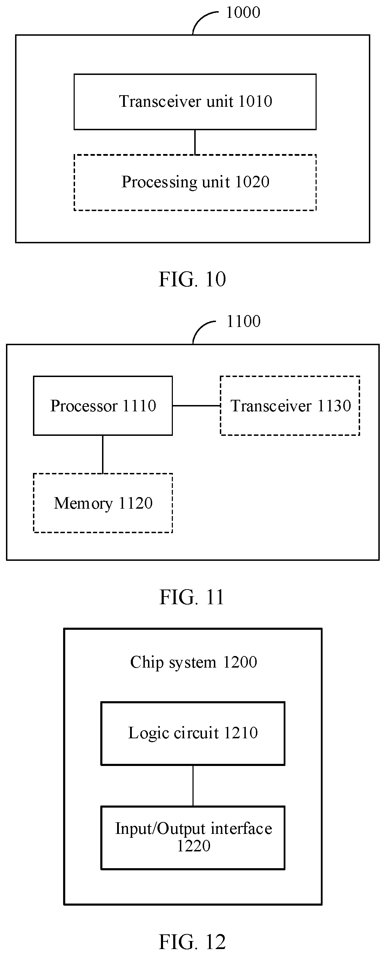

FIG. 10 is a block diagram of a communication apparatus 1000 according to an embodiment of this application. The apparatus 1000 includes a transceiver unit 1010. The transceiver unit 1010 may be configured to implement a corresponding communication function. The transceiver unit 1010 may also be referred to as a communication interface or a communication unit.

Optionally, the apparatus 1000 further includes a processing unit 1020. The processing unit 1020 may be configured to process information.

Optionally, the apparatus 1000 further includes a storage unit. The storage unit may be configured to store instructions and/or data. The processing unit 1020 may read the instructions and/or the data in the storage unit, so that the apparatus implements actions of the communication apparatus in the foregoing method embodiments.

In a design, the apparatus 1000 may be the terminal device in the foregoing embodiments, or may be a component (for example, a chip) of the terminal device. The apparatus 1000 may implement steps or procedures performed by the terminal device in the foregoing method embodiments. The transceiver unit 1010 may be configured to perform receiving/sending-related operations of the terminal device in the foregoing method embodiments. The processing unit 1020 may be configured to perform processing-related operations of the terminal device in the foregoing method embodiments.

In a possible implementation, the transceiver unit 1010 is configured to receive first information, and may be further configured to send a first report.

In another possible implementation, the processing unit 1020 is configured to switch a cell, and may be further configured to record the first report.

The apparatus 1000 may implement the steps or the procedures performed by the terminal device in the method embodiments according to embodiments of this application. The apparatus 1000 may include units configured to perform the method performed by the terminal device in the embodiments shown in FIG. 6 to FIG. 9.

In another design, the apparatus 1000 may be the network device in the foregoing embodiments, or may be a component (for example, a chip) of the network device. The apparatus 1000 may implement steps or procedures performed by the network device in the foregoing method embodiments. The transceiver unit 1010 may be configured to perform receiving/sending-related operations of the network device in the foregoing method embodiments. The processing unit 1020 may be configured to perform processing-related operations of the network device in the foregoing method embodiments.

In a possible implementation, the processing unit 1020 is configured to send first information.

In another possible implementation, the transceiver unit 1010 is configured to receive a first report. The apparatus 1000 may implement the steps or the procedures performed by the network device in the method embodiments according to embodiments of this application. The apparatus 1000 may include units configured to perform the method performed by the network device in the embodiments shown in FIG. 6 to FIG. 9.

For more detailed descriptions of the apparatus 1000, directly refer to the related descriptions in the foregoing method embodiments. Details are not described herein again.

It should be understood that a specific process in which the units perform the foregoing corresponding steps is described in detail in the foregoing method embodiments. For brevity, details are not described herein.

It should be understood that the apparatus 1000 herein is embodied in a form of a functional unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 1000 may be specifically the communication apparatus (for example, the terminal device or the network device) in the foregoing embodiments, and may be configured to perform procedures and/or steps corresponding to the communication apparatus in the foregoing method embodiments. To avoid repetition, details are not described herein again.

The apparatus 1000 in the foregoing solutions has a function of implementing corresponding steps performed by the communication apparatus (for example, the terminal device or the network device) in the foregoing methods. The function may be implemented by using hardware, or may be implemented by using hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit 1010 may alternatively be a transceiver circuit (for example, the transceiver circuit may include a receiver circuit and a transmitter circuit), and the processing unit may be a processing circuit.

It should be noted that the apparatus in FIG. 10 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 11 is a block diagram of a communication apparatus 1100 according to an embodiment of this application. The apparatus 1100 includes a processor 1110, and the processor 1110 is coupled to a memory 1120. Optionally, the apparatus further includes the memory 1120, configured to store a computer program or instructions and/or data. The processor 1110 is configured to execute the computer program or the instructions stored in the memory 1120, or read the data stored in the memory 1120, to perform the methods in the foregoing method embodiments.

Optionally, there are one or more processors 1110.

Optionally, there are one or more memories 1120.

Optionally, the memory 1120 and the processor 1110 are integrated together, or are disposed separately.

Optionally, as shown in FIG. 11, the apparatus 1100 further includes a transceiver 1130. The transceiver 1130 is configured to receive a signal and/or send a signal. For example, the processor 1110 is configured to control the transceiver 1130 to receive a signal and/or send a signal.

In a solution, the apparatus 1100 is configured to implement operations performed by the communication apparatus in the foregoing method embodiments.

For example, the processor 1110 is configured to execute the computer program or the instructions stored in the memory 1120, to implement related operations of the terminal device or the network device in the foregoing method embodiments.

In an implementation process, steps of the foregoing method may be completed by using an integrated logic circuit of hardware in the processor 1110 or instructions in a form of software. The method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 1120. The processor 1110 reads information in the memory 1120, and completes the steps of the foregoing methods in combination with hardware of the processor. To avoid repetition, details are not described herein again.

It should be understood that, in embodiments of this application, the processor may be one or more integrated circuits, and is configured to execute a related program, to perform the method embodiments of this application.

The processor (for example, the processor 1110) may include one or more processors and be implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit or other appropriate hardware or firmware, and/or a combination of hardware and software, and is configured to perform various functions described in this disclosure. The processor may be a general-purpose processor or a dedicated processor. For example, the processor 1110 may be a baseband processor or a central processing unit. The baseband processor may be configured to process a communication protocol and communication data. The central processing unit may be configured to enable the apparatus to execute a software program and process data in the software program. In addition, a part of the processor may further include a non-volatile random access memory. For example, the processor may further store information of a device type. The program in this application represents software in a broad sense. A non-limitative example of the software includes program code, a program, a subprogram, instructions, an instruction set, code, a code segment, a software module, an application program, a software application program, or the like. The program may be run in a processor and/or a computer, to enable the apparatus to perform various functions and/or processes described in this application.

The memory (for example, the memory 1120) may store data required by the processor (for example, the processor 1110) during software execution. The memory may be implemented by using any suitable storage technology. For example, the memory may be any available storage medium that can be accessed by a processor and/or a computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM) and a direct rambus random access memory (direct rambus RAM, DR RAM), a removable medium, an optical disk memory, a magnetic disk storage medium, a magnetic storage device, a flash memory, a register, a state memory, a remote mount memory, a local or remote memory component, or any other medium capable of carrying or storing software, data, or information and accessible by a processor/computer. It should be noted that the memory described in this specification aims to include but is not limited to these memories and any memory of another appropriate type.

The memory (for example, the memory 1120) and the processor (for example, the processor 1110) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in UE or another network node).

FIG. 12 is a block diagram of a chip system 1200 according to an embodiment of this application. The chip system 1200 (or may be referred to as a processing system) includes a logic circuit 1210 and an input/output interface (input/output interface) 1220.

The logic circuit 1210 may be a processing circuit in the chip system 1200. The logic circuit 1210 may be coupled to a storage unit, and invoke instructions in the storage unit, so that the chip system 1200 can implement the methods and functions in embodiments of this application. The input/output interface 1220 may be an input/output circuit in the chip system 1200, and outputs information processed by the chip system 1200, or inputs to-be-processed data or signaling information to the chip system 1200 for processing.

In a solution, the chip system 1200 is configured to implement operations performed by the communication apparatus in the foregoing method embodiments.

For example, the logic circuit 1210 is configured to implement processing-related operations performed by the terminal device in the foregoing method embodiments, for example, processing-related operations performed by the terminal device in the embodiment shown in FIG. 3. The input/output interface 1220 is configured to implement sending and/or receiving-related operations performed by the terminal device in the foregoing method embodiments, for example, sending and/or receiving-related operations performed by the terminal device in the embodiment shown in FIG. 3.

For another example, the logic circuit 1210 is configured to implement processing-related operations performed by the network device in the foregoing method embodiments, for example, processing-related operations performed by the network device in the embodiment shown in FIG. 3. The input/output interface 1220 is configured to implement sending and/or receiving-related operations performed by the network device in the foregoing method embodiments, for example, sending and/or receiving-related operations performed by the network device in the embodiment shown in FIG. 3.

An embodiment of this application further provides a computer-readable storage medium. The computer-readable storage medium stores computer instructions used to implement the method performed by the communication apparatus (for example, the terminal device or the network device) in the foregoing method embodiments.

An embodiment of this application further provides a computer program product, including instructions. When the instructions are executed by a computer, the method performed by the communication apparatus (for example, the terminal device or the network device) in the foregoing method embodiments is implemented.

An embodiment of this application further provides a communication system. The communication system includes the terminal device and the network device in the foregoing embodiments.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the solutions provided in this application.

In addition, functional units in embodiments of this application may be integrated into one unit, or each unit may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

When software is used to implement the functions, all or some of the functions may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information, wherein the first information indicates a terminal device to hand over from a source cell to a target cell, the target cell belongs to at least one candidate cell, configuration information of the target cell belongs to configuration information of the at least one candidate cell that is received by the terminal device, and the first information is conveyed in a medium access control control element;
recording a first report, wherein the first report indicates a cause of a connection failure during a layer 1 or layer 2 mobility process performed by the terminal device; and
sending the first report.

2. The method according to claim 1, wherein the first report further indicates information about a first candidate cell, the information about the first candidate cell comprises at least one of: identification information of the first candidate cell, whether a random access response RAR is configured for the first candidate cell, or layer 1 reporting configuration information corresponding to the first candidate cell, and the first candidate cell is one or more of the at least one candidate cell.

3. The method according to claim 1 or 2, wherein the first report further indicates early timing advance information, and the early timing advance information comprises at least one of: whether the terminal device performs early timing advance in the target cell, a candidate cell for performing the early timing advance, a quantity of physical downlink control link orders for indicating to perform the early timing advance in the candidate cell, physical random access channel resource information, a synchronization signal block beam identifier, or a preamble identifier.

4. The method according to any one of claims 1 to 3, wherein the connection failure comprises a radio link failure in the source cell; and
a cause of the radio link failure comprises at least one of the following:
running duration of a first timer is greater than or equal to a first threshold, wherein the running duration of the first timer is duration from a time point when the terminal device detects a physical layer out-of-synchronization problem with a source network device to a time point when the terminal device receives the first information; or
running duration of a second timer is greater than or equal to a second threshold, wherein the running duration of the second timer is duration from a time point when the terminal device triggers measurement report transmission to the time point when the terminal device receives the first information during running of the first timer.

5. The method according to claim 4, wherein the cause of the radio link failure further comprises at least one of: a random access failure, a beam failure recovery failure, a listen before talk failure, or a quantity of radio link control layer protocol retransmissions being greater than or equal to a fifth threshold.

6. The method according to claim 4 or 5, wherein the first report further indicates radio link failure information of the source cell, and the radio link failure information of the source cell comprises at least one of: a layer 1 measurement result or a layer 3 measurement result that is available upon detecting a failure, a connection failure type being radio link failure, a cell in which a radio link failure occurs being the source cell, or duration from a time point when the terminal device receives the configuration information of the at least one candidate cell to a time point when the terminal device detects the radio link failure of the source cell.

7. The method according to any one of claims 1 to 3, wherein the connection failure comprises a handover failure of the terminal device or a handover failure within a first time period after a handover success, and the first time period is predefined or configured.

8. The method according to claim 7, wherein the first report further indicates at least one of the following:
an identifier of the target cell;
whether the target cell has an available timing advance value;
an access type used by the terminal device to access the target cell, wherein the access type is random access free or random access, or the access type is random access free;
beam indication information used for uplink or downlink data transmission in the target cell;
an identifier of a first cell, wherein the first cell is a cell having an available timing advance value, and the first cell is one or more of the at least one candidate cell; or
first time information, wherein the first time information comprises at least one of the following:
duration from a time point when the terminal device receives the configuration information of the at least one candidate cell to a time point when the terminal device receives the first information or a time point when the terminal device initiates cell switch;
duration from a time point when the terminal device receives a 1^{st} physical downlink control channel PDCCH order to a time point when the terminal device receives the first information or a time point when the terminal device initiates cell switch; or
duration from a time point when the terminal device receives a last physical downlink control channel PDCCH order to a time point when the terminal device receives the first information or a time point when the terminal device initiates cell switch.

9. The method according to claim 7 or 8, wherein the first report further indicates at least one of the following:
a connection failure type, wherein the connection failure type is handover failure or radio link failure;
a cause of the handover failure, wherein the cause of the handover failure comprises at least one of the following:
running duration of a third timer is greater than or equal to a third threshold, wherein
the running duration of the third timer is duration from the time point when the terminal device receives the first information to a time point when the terminal device completes random access or a time point when the terminal device sends a 1^{st} piece of uplink data; or
running duration of a fourth timer is greater than or equal to a fourth threshold, wherein the running duration of the fourth timer is duration from a time point when the terminal receives or executes an RRC reconfiguration message having a synchronization function to a time point when the terminal device completes random access or a time point when the terminal device receives a physical control channel transmission after a 1^{st} uplink transmission during random access free;
a type of a last handover being layer 1 or layer 2 mobility switch;
detecting that a cell in which a connection failure occurs is the target cell;
second time information, wherein the second time information comprises duration from a time point when the terminal device receives a previous layer 1 or layer 2 mobility command to a time point when a cell switch failure occurs or a time point when the terminal device sends the first report; or
the second time information comprises duration from a time point when the terminal device initiates cell switch to a time point when a cell switch failure occurs or a time point when the terminal device sends the first report;
the running duration of the third timer;
the running duration of the fourth timer;
a layer 1 measurement result or a layer 3 measurement result that is available upon detecting a failure; or
random access-based cell switch process information, wherein the random access-based cell switch process information comprises information about a 2-step random access procedure and/or a 4-step random access procedure.

10. A communication method, comprising:
sending first information, wherein the first information indicates a terminal device to hand over from a source cell to a target cell, the target cell belongs to at least one candidate cell, configuration information of the target cell belongs to configuration information of the at least one candidate cell that is received by the terminal device, and the first information is conveyed in a medium access control control element; and
receiving a first report, wherein the first report indicates a cause of a connection failure during a layer 1 or layer 2 mobility process performed by the terminal device.

11. The method according to claim 10, wherein the first report further indicates information about a first candidate cell, the information about the first candidate cell comprises at least one of: identification information of the first candidate cell, whether a random access response RAR is configured for the first candidate cell, or layer 1 reporting configuration information corresponding to the first candidate cell, and the first candidate cell is one or more of the at least one candidate cell.

12. The method according to claim 10 or 11, wherein the first report further indicates early timing advance information, and the early timing advance information comprises at least one of: whether the terminal device performs early timing advance in the target cell, a candidate cell for performing the early timing advance, a quantity of physical downlink control channel PDCCH orders for indicating to perform the early timing advance in the candidate cell, physical random access channel resource information, a synchronization signal block beam identifier, or a preamble identifier.

13. The method according to any one of claims 10 to 12, wherein the connection failure comprises a radio link failure in the source cell; and
a cause of the radio link failure comprises at least one of the following:
running duration of a first timer is greater than or equal to a first threshold, wherein the running duration of the first timer is duration from a time point when the terminal device detects a physical layer out-of-synchronization problem with a source network device to a time point when the terminal device receives the first information; or
running duration of a second timer is greater than or equal to a second threshold, wherein the running duration of the second timer is duration from a time point when the terminal device triggers measurement report transmission to the time point when the terminal device receives the first information during running of the first timer.

14. The method according to claim 13, wherein the cause of the radio link failure further comprises at least one of: a random access failure, a beam failure recovery failure, a listen before talk failure, or a quantity of radio link control layer protocol retransmissions being greater than or equal to a fifth threshold.

15. The method according to claim 13 or 14, wherein the first report further indicates radio link failure information of the source cell, and the radio link failure information of the source cell comprises at least one of: a layer 1 measurement result or a layer 3 measurement result that is available upon detecting a failure, a connection failure type being radio link failure, a cell in which a radio link failure occurs being the source cell, or duration from a time point when the terminal device receives the configuration information of the at least one candidate cell to a time point when the terminal device detects the radio link failure of the source cell.

16. The method according to any one of claims 10 to 12, wherein the connection failure comprises a handover failure of the terminal device or a handover failure within a first time period after a handover success, and the first time period is predefined or configured.

17. The method according to claim 16, wherein the first report further indicates at least one of the following:
an identifier of the target cell;
whether the target cell has an available timing advance value;
an access type used by the terminal device to access the target cell, wherein the access type is random access free or random access, or the access type is random access free;
beam indication information used for uplink or downlink data transmission in the target cell;
an identifier of a first cell, wherein the first cell is a cell having an available timing advance value, and the first cell is one or more of the at least one candidate cell; or
first time information, wherein the first time information comprises at least one of the following:
duration from a time point when the terminal device receives the configuration information of the at least one candidate cell to a time point when the terminal device receives the first information or a time point when the terminal device initiates cell switch;
duration from a time point when the terminal device receives a 1^{st} physical downlink control channel PDCCH order to a time point when the terminal device receives the first information or a time point when the terminal device initiates cell switch; or
duration from a time point when the terminal device receives a last physical downlink control channel PDCCH order to a time point when the terminal device receives the first information or a time point when the terminal device initiates cell switch.

18. The method according to claim 16 or 17, wherein the first report further indicates at least one of the following:
a connection failure type, wherein the connection failure type is handover failure or radio link failure;
a cause of the handover failure, wherein the cause of the handover failure comprises at least one of the following:
running duration of a third timer is greater than or equal to a third threshold, wherein
the running duration of the third timer is duration from the time point when the terminal device receives the first information to a time point when the terminal device completes random access or a time point when the terminal device sends a 1^{st} piece of uplink data; or
running duration of a fourth timer is greater than or equal to a fourth threshold, wherein the running duration of the fourth timer is duration from a time point when the terminal receives or executes an RRC reconfiguration message having a synchronization function to a time point when the terminal device completes random access or a time point when the terminal device receives a physical control channel transmission after a 1^{st} uplink transmission during random access free;
a type of a handover being layer 1 or layer 2 mobility switch;
detecting that a cell in which a connection failure occurs is the target cell;
second time information, wherein the second time information comprises duration from a time point when the terminal device receives a previous layer 1 or layer 2 mobility command to a time point when a cell switch failure occurs or a time point when the terminal device sends the first report; or
the second time information comprises duration from a time point when the terminal device initiates cell switch to a time point when a cell switch failure occurs or a time point when the terminal device sends the first report;
the running duration of the third timer;
the running duration of the fourth timer;
a layer 1 measurement result or a layer 3 measurement result that is available upon detecting a failure; or
random access-based cell switch process information, wherein the random access-based cell switch process information comprises information about a 2-step random access procedure and/or a 4-step random access procedure.

19. A communication apparatus, comprising a module configured to perform the method according to any one of claims 1 to 9.

20. A communication apparatus, comprising a module configured to perform the method according to any one of claims 10 to 18.

21. A communication system, comprising the communication apparatuses according to claims 19 and 20.

22. A computer-readable storage medium, wherein the computer-readable storage medium stores a computer program or instructions, and when the computer program or the instructions are run on a computer, the computer is enabled to perform the method according to any one of claims 1 to 18.

23. A computer program product, wherein the computer program product comprises instructions for performing the method according to any one of claims 1 to 18.
